# EUROPÄISCHE PATENTSCHRIFT

(11) **EP 2 212 175 B1**
(45) Veröffentlichungstag und Bekanntmachung des Hinweises auf die Patenterteilung: **02.10.2013**
(21) Anmeldenummer: 08842777.8
(22) Anmeldetag: 21.10.2008
(51) Int. Cl.: B60W 40/04, B60W 30/08, G08G 1/16

(54) **VERFAHREN UND SYSTEM ZUM ERHÖHEN DER SICHERHEIT IN EINEM KRAFTFAHRZEUG**
METHOD AND SYSTEM FOR INCREASING THE SAFETY IN A MOTOR VEHICLE
PROCÉDÉ ET SYSTÈME POUR AUGMENTER LA SÉCURITÉ DANS UN VÉHICULE AUTOMOBILE

(30) Priorität: 22.10.2007 DE 102007050754
(43) Veröffentlichungstag der Anmeldung: 04.08.2010
(73) Patentinhaber: Continental Teves AG & Co. OHG, 60488 Frankfurt (DE)
(72) Erfinder: STÄHLIN, Ulrich, 65670 Eschborn (DE); RIETH, Peter, 65343 Eltville (DE)
(74) Vertreter: Bobbert, Christiana
(86) Internationale Anmeldenummer: PCT/EP2008/064227
(87) Internationale Veröffentlichungsnummer: WO 2009/053371

(56) Entgegenhaltungen:
- EP-A- 1 338 867
- EP-A- 1 431 947
- EP-A- 1 527 940
- EP-A- 1 739 641
- DE-A1- 10 334 203
- DE-A1-102005 059 688
- US-B1- 6 442 484

## Beschreibung

### Technisches Gebiet

Die Erfindung bezieht sich auf den Einsatz von Sicherheitsmitteln in einem Kraftfahrzeug. Gegenstand der Erfindung ist insbesondere ein Verfahren zum Erhöhen der Sicherheit in einem Kraftfahrzeug. Ferner betrifft die Erfindung ein System zum Erhöhen der Sicherheit in einem Kraftfahrzeug, das zur Durchführung des Verfahrens geeignet ist.

### Hintergrund der Erfindung

Moderne Kraftfahrzeuge verfügen teilweise bereits über Sicherheitssysteme, die in Fahrsituationen, in denen es zu einer Kollision mit einem Umfeldobjekt kommen könnte, Sicherheitsmittel ansteuern, welche den Fahrer auf die Gefahr aufmerksam machen, mittels derer kollisionsvermeidende Eingriffe in das Fahrverhalten des Fahrzeugs vorgenommen werden können und/oder welche die passive Sicherheit erhöhen, d.h. mögliche Unfallfolgen für die Fahrzeuginsassen reduzieren. Grundlage für die Ansteuerung der Sicherheitssysteme ist eine Erfassung der aktuellen Fahrsituation mittels einer geeigneten Umfeldsensorik und eine elektronische Auswertung der erfassten Daten im Hinblick auf die Gefahr von Kollisionen zwischen dem Fahrzeug und den erfassten Objekten.

Dabei können in der Regel nicht alle Gefahren mittels der Umfeldsensorik des Fahrzeugs erfasst werden, da eine Gefahrenstelle bzw. eine Objekt von dem die Gefahr ausgeht sich außerhalb des Erfassungsbereichs der Umfeldsensorik befinden kann. Es ist daher bereits vorgeschlagen worden, zur Erkennung von Gefahrensituationen Informationen heranzuziehen, die außerhalb des Fahrzeugs erfasst werden, beispielsweise in weiteren Fahrzeugen.

Hierbei besteht jedoch das Problem, dass Informationen, die von einer Erfassungseinrichtung außerhalb des Fahrzeuges zur Verfügung gestellt werden, in der Regel weniger zuverlässig sind als Informationen, die von einer Erfassungseinrichtung innerhalb des Fahrzeugs zur Verfügung gestellt werden. Grund hierfür ist zum einen, dass in der Regel keine zuverlässige Information über die Genauigkeit der Informationen vorliegt, die außerhalb des Fahrzeugs erfasst werden, Zum anderen müssen die Informationen von einer außerhalb des Fahrzeugs angeordneten Erfassungseinrichtung an das Fahrzeug übertragen werden, wobei Übertragungsfehler auftreten können.

EP-A-1 739 641 betrifft eine automatische Fahrzeugfolgesteuerung ("following run"). Eine automatische Bremsen- oder Beschleunigungssteuerung wird hierbei abgeschaltet, wenn die Wahrscheinlichkeit einer Kollision zwischen dem Fahrzeug B, das dem Fahrzeug A folgt, mit einem Fahrzeug C größer oder gleich als ein vorbestimmter Wert ist. Stattdessen erfolgt eine Fahrerwarnung. Die US-B1-6 442 484 betrifft ein Verfahren zum Betreiben eines Pre-Crash-Sensing-Systems eines Fahrzeugs, bei dem die Umgebung des Fahrzeugs in mehrere Zonen unterteilt wird. Wenn ein Objekt in einer der Zonen detektiert wird, wird die entsprechende Zone aktiviert und ein Zustand eines Objekterkennungssystems und ein Datenspeicherinhalt abhängig von der aktivierten Zone derart modifiziert, dass die das detektierte Objekt repräsentierenden Daten abhängig von der Zone für die weitere Verarbeitung priorisiert werden. Die DE 103 34 203 A1 offenbart ein interaktives Verkehrsabwicklungssystem zur Unfallverhinderung, bei dem eine situationsgebundene automatische Interkommunikation der Verkehrsteilnehmer untereinander erfolgt. Die DE 10 2005 059 688 A1 offenbart ein Kraftfahrzeug mit einer Auffahrwarnvorrichtung, das eine im Heck angeordnete Umfeldsensorik aufweist. Wenn über die Umfeldsensorik das Erreichen eines kritischen Abstands eines nachfolgenden Fahrzeugs detektiert wird, gibt das eigene Fahrzeug Lichtsignale in einem situationsbedingten Blinkmodus zur Auffahrwarnung an den rückwärtigen Verkehr ab. Die EP-A-1 431 947 beschreibt ein Fahrerassistenzsystem mit Vehicle-to-Vehicle-Kommunikationsfunktionalität. Über Vehicle-to-Vehicle-Kommunikation werden einem Fahrzeug Informationen eines anderen Fahrzeugs übermittelt, dessen geschätzter Fahrweg sich mit dem eigenen Fahrweg kreuzen wird. Die EP-A-1 527 940 beschreibt die Nutzung eines künstlichneuronalen Netzes zum Ermitteln einer spezifischen alphanumerischen Sequenz aus der Gesamtheit von detektierten Risikofaktoren eines äußeren Milieus eines Fahrzeugs. Die ermittelte Sequenz wird mit gespeicherten Sequenzen verglichen und in einem fahrzeugeigenen Feedback auf ihre Gefährlichkeit überprüft. Die EP-A-1 338 867 offenbart ein Verkehrsdaten-Informationssystem, das mit diversen Empfangsgeräten für verkehrsrelevante Daten von verschiedenen Quellen ausgestattet ist.

### Darstellung der Erfindung

Es ist eine Aufgabe der vorliegenden Erfindung, die Zuverlässlgkeit eines Sicherheitssystems eines Fahrzeugs, das außerhalb des Fahrzeugs erfasste Informationen zur Erkennung einer Gefahrensituation heranzieht, zu erhöhen.

Die Aufgabe wird durch ein Verfahren mit den Merkmalen des Patentanspruchs 1 und durch ein System mit den Merkmalen des Patentanspruchs 13 gelöst. Ausführungsformen des Verfahrens und des Systems sind in den abhängigen Ansprüchen angegeben.

Gemäß einem ersten Aspekt der Erfindung wird ein Verfahren zum Erhöhen der Sicherheit in einem Fahrzeug vorgeschlagen. Bei dem Verfahren wird eine Gefahrensituation anhand von Informationen erkannt, die von wenigstens einer Informationsquelle beieitgestellt werden, die innerhalb oder außerhalb des Fahrzeugs angeordnet ist. Ferner wird in dem Fahrzeug eine Sicherheitsmaßnahme ausgeführt, die in Abhängigkeit von der Informationsquelle bestimmt wird.

Gemäß einem weiteren Aspekt der Erfindung wird ein System zum Erhöhen der Sicherheit in einem Fahrzeug bereitgestellt. Das System umfasst eine Steuerungseinrichtung, die dazu ausgebildet ist, eine Gefahrensituation anhand von Informationen zu ermitteln, die von wenigstens einer Informationsquelle bereitgestellt wird, die innerhalb oder außerhalb des Fahrzeugs angeordnet ist. Ferner ist die Steuerungseinrichtung dazu ausgebildet, in dem Fahrzeug die Ausführung einer Sicherheitsmaßnahme zu steuern, wobei die Sicherheitsmaßnahme in Abhängigkeit von der Informationsquelle bestimmt wird.

Die Erfindung beinhaltet die Idee, zur Erkennung von Gefahrensituationen auch Informationen zu verwenden, die von Informationsquellen außerhalb des Fahrzeugs bereitgestellt werden. Hierbei kann es sich beispielsweise um Erfassungseinrichtungen handeln, welche insbesondere Messdaten zur Erkennung einer Gefahrensituation erfassen. Gleichfalls können jedoch auch andere Informationsquellen verwendet werden, die beispielsweise eine gespeicherte Information bereitstellen.

Die Sicherheitsmaßnahme, die zur Vermeidung und/oder Verringerung der Gefahr durchgeführt wird, wird erfindungsgemäß in Abhängigkeit von der Informationsquelle bestimmt, welche die Information bereitstellt, anhand derer eine Gefahrensituation erkannt wird. Hierdurch kann berücksichtigt werden, dass Informationen, die von einer Erfassungseinrichtung außerhalb des Fahrzeugs zur Verfügung gestellt werden, weniger zuverlässig sind als Informationen, die von einer Erfassungseinrichtung innerhalb des Fahrzeugs zur Verfügung gestellt werden.

In einer Ausgestaltung des Verfahrens und des Systems ist vorgesehen, dass eine innerhalb des Fahrzeugs befindliche Informationsquelle wenigstens einen Umfeldsensor umfasst, wobei eine Gefahrensituation ermittelt wird, wenn anhand der mittels des Umfeldsensors erfassten Umfelddaten eine drohende Kollision des Fahrzeugs mit einem Umfeldobjekt ermittelt wird.

Eine weitere Ausgestaltung des Verfahrens und des Systems sieht vor, dass Informationen, die von einer außerhalb des Fahrzeugs angeordneten Informationsquelle bereitgestellt werden, mittels einer Kommunikationsschnittstelle, insbesondere mittels eines Funkempfängers, in dem Fahrzeug empfangen werden.

Hierdurch ist eine einfache Übertragung der Informationen an das Fahrzeug mittels einer Funkverbindung möglich. Die Funkverbindung kann beispielsweise als eine DSRC-Verbindung (DSRC: Dedicated Short Range Communication) ausgestaltet sein, die eine Ad-hoc-Kommunikation zwischen Fahrzeugen bzw. zwischen einem Fahrzeug und einem stationären Sender ermöglicht. Gleichfalls können jedoch auch andere Kommunikationstechnologien eingesetzt werden, wie z.B. GPRS, UMTS, LTE, WiMax, WLAN, TMC, RDS, DAB und dergleichen.

Eine Ausführungsform des Verfahrens und des Systems beinhaltet, dass eine außerhalb des Fahrzeugs angeordnete Informationsquelle in einem weiteren Fahrzeug angeordnet ist und/oder Bestandteil einer stationären Einrichtung ist.

Bei der stationären Einrichtung kann es sich beispielsweise um ein Verkehrsüberwachungssystem zur Überwachung eines bestimmten Straßenabschnitts, wie beispielsweise eines Tunnels, handeln oder um ein System welches Verkehrsinformationen über den Rundfunk bereitstellt, die in dem Fahrzeug empfangen werden. Gleichfalls können jedoch auch andere stationäre Einrichtungen Informationen bereitstellen, die zur Ermittelung einer Gefahrensituation herangezogen werden können.

Wie zuvor erwähnt, wird bei der Auswahl der Sicherheitsmaßnahme berücksichtigt, dass Informationen, die außerhalb des Fahrzeugs generiert werden, in der Regel weniger zuverlässig sind als Informationen, die innerhalb des Fahrzeugs generiert werden. Daher ist eine Ausführungsform des Verfahrens und des Systems dadurch gekennzeichnet, dass die Sicherheitsmaßnahme in Abhängigkeit von der Anordnung der Informationsquelle in Bezug auf das Fahrzeug ermittelt wird.

Eine Weiterbildung des Verfahrens und des Systems beinhaltet, dass abgestufte Sicherheitsmaßnahmen vorgesehen sind, wobei die auswählbaren Stufen auf eine vorgegebene maximale Stufe begrenzt werden können. Die Stufe entspricht dabei beispielsweise der Heftigkeit einer Maßnahme in Bezug auf die Wahrnehmung durch den Fahrer des Fahrzeugs oder weitere Fahrzeuginsassen und in Bezug auf Auswirkungen auf weitere Verkehrsteilnehmer. Je höher dabei die Stufe ist, desto heftiger ist die ausgeführte Maßnahme.

Dabei zeichnet sich eine Ausgestaltung des Verfahrens und des Systems dadurch aus, dass die höchste vorgesehene Stufe als maximale Stufe festgelegt wird, wenn eine Gefahrensituation anhand von Informationen ermittelt wird, die von einer Informationsquelle innerhalb des Fahrzeugs bereitgestellt werden. Vorteilhaft wird hierbei ausgenutzt, dass die Informationen, die von einer Informationsquelle innerhalb des Fahrzeugs, beispielsweise einer innerhalb des Fahrzeugs angeordneten Erfassungseinrichtung, bereitgestellt werden, eine hohe Zuverlässigkeit aufweisen.

Eine weitere Ausführungsform des Verfahrens und des Systems beinhaltet, dass im Falle, dass eine Gefahrensituation nur anhand von Informationen ermittelt wird, die von wenigstens einer Informationsquelle außerhalb des Fahrzeugs bereitgestellt werden, die maximale Stufe in Abhängigkeit von dem Ergebnis eines Vergleichs von Informationen bestimmt wird, die von verschiedenen Informationsquellen empfangen werden.

Bei dem Vergleich kann insbesondere ermittelt werden, ob mehrere außerhalb des Fahrzeugs angeordnete Informationsquellen übereinstimmende bzw. konsistente Informationen bereitstellen, um die Zuverlässigkeit der Informationen statistisch zu prüfen.

Die Zuverlässigkeit ist in der Regel größer, wenn mehrere Informationsquellen konsistente Informationen bereitstellen. Daher sieht eine Ausgestaltung des Verfahrens und des Systems vor, dass im Falle, dass eine Gefahrensituation nur anhand von Informationen ermittelt wird, die von wenigstens einer Informationsquelle außerhalb des Fahrzeugs bereitgestellt werden, die maximale Stufe in Abhängigkeit von der Anzahl von außerhalb des Fahrzeugs angeordneten Informationsquellen bestimmt wird, die Informationen bereitstellen, welche dieselbe Gefahrensituation beschreiben.

Gleichfalls kann in der Regel von einer größeren Zuverlässigkeit ausgegangen werden, wenn konsistente Informationen über eine längere Zeit hinweg bereitgestellt werden. Daher sieht eine weitere Ausgestaltung des Verfahrens und des System vor, dass im Falle, dass eine Gefahrensituation nur anhand von Informationen ermittelt wird, die von wenigstens einer Informationsquelle außerhalb des Fahrzeugs bereitgestellt werden, die maximale Stufe in Abhängigkeit von einer Zeitdauer bestimmt wird, innerhalb derer wenigstens eine Informationsquelle außerhalb des Fahrzeugs Informationen bereitstellt, welche sich auf dieselbe Gefahrensituation beziehen.

Darüber hinaus beinhaltet eine Weiterbildung des Verfahrens und des Systems, dass geprüft wird, ob eine Gefahrensituation, die nur anhand von Informationen einer außerhalb des Fahrzeugs angeordneten Informationsquelle ermittelt wird, mittels wenigstens eines Sensors des Fahrzeugs erfassbar ist, und bei dem bei die maximale Stufe kleiner als die höchste Stufe gewählt wird, wenn festgestellt wird, dass eine Gefahrensituation mittels des Sensors erfassbar ist.

Vorteilhaft wird bei dieser Weiterbildung wiederum die Tatsache ausgenutzt, dass eine Informationsquelle innerhalb des Fahrzeugs besonders zuverlässige Informationen bereitstellt. Insoweit ist davon auszugehen, dass nur eine geringe Wahrscheinlichkeit dafür besteht, dass die Gefahrensituation tatsächlich vorliegt, wenn die Gefahrensituation anhand von Informationen, die von einer Informationsquelle innerhalb des Fahrzeugs bereitgestellt werden, nicht erkannt wird, obwohl dies möglich sein müsste.

Ferner ist in einer Ausgestaltung des Verfahrens und des System vorgesehen, dass die geringste Stufe eine Warnung des Fahrers des Fahrzeugs umfasst. Eine weitere Ausgestaltung des Verfahrens und des Systems beinhaltet, dass eine höchste Stufe automatische Eingriffe in das Fahrverhalten des Fahrzeugs umfasst. Zudem ist eine Ausgestaltung des Verfahrens und des Systems dadurch gekennzeichnet, dass eine mittlere Stufe eine Vorkonditionierung des Fahrzeugs umfasst.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

### Kurze Beschreibung der Figuren

Von den Figuren zeigt:
- Fig. 1: eine schematische Darstellung eines Kraftfahrzeugs mit einem Fahrerassistenzsystem zur Steuerung von Sicherheitsmaßnahmen in einer Gefahrensituation,
- Fig. 2: eine schematische Darstellung mit dem in Figur 1 dargestellten Kraftfahrzeug und verschiedenen Informationsquellen, die Informationen zu der Gefahrensituation bereitstellen können, und
- Fig. 3: ein schematisches Blockdiagramm des Fahrerassistenzsystems in einer beispielhaften Ausgestaltung.

### Darstellung von Ausführungsbeispielen

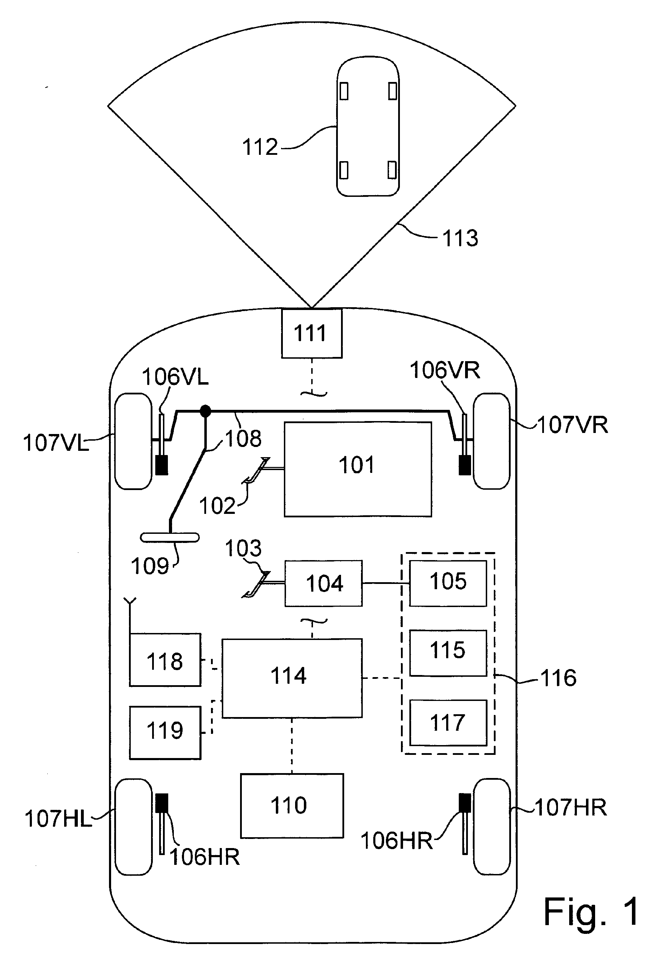

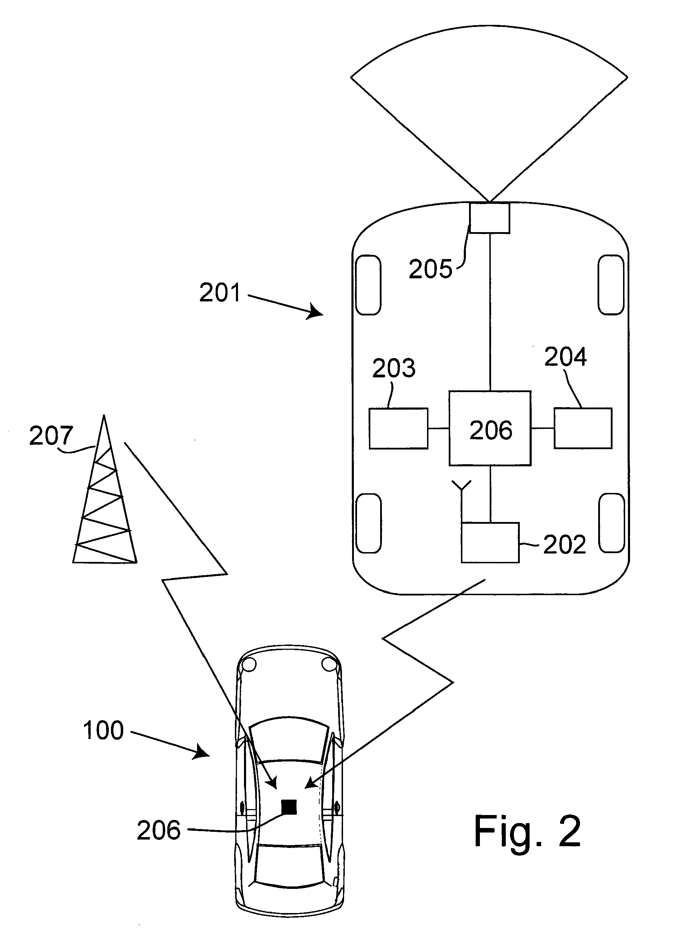

In Figur 1 ist ein Kraftfahrzeug 100 (Fig. 2) dargestellt, welches über einen Antriebsmotor 101 verfügt, der von dem Fahrer des Kraftfahrzeugs 100 mittels eines Fahrpedals 102 gesteuert wird. Ein von dem Antriebsmotor 101 bereitgestelltes Antriebsmoment wird über einen in der Figur nicht dargestellten Antriebsstrang an zwei oder alle vier Fahrzeugräder 107VL, 107VR, 107HL, 107HR übertragen, um das Kraftfahrzeug 100 anzutreiben. Das Fahrzeug 100 wird im Folgenden zur besseren Unterscheidbarkeit von weiteren Fahrzeugen auch als Egofahrzeug 100 bezeichnet.

In der beispielhaften Darstellung sind die Vorderräder 107VL, 107VR des Egofahrzeugs 100 lenkbar ausgeführt und über einen Lenkstrang 108 mit einem von dem Fahrer des Egofahrzeugs 100 bedienbaren Lenkrad 109 verbunden.

Zudem verfügt das Egofahrzeug 100 über eine Bremsanlage, die beispielsweise als hydraulische Bremsanlage, elektro-hydraulischen Bremsanlage (EHB) oder elektro-mechanischen Bremsanlage (EMB) ausgeführt ist. Im Folgenden werden das Verfahren und das System anhand einer hydraulischen Bremsanlage beschrieben. Von dem Fahrer des Egofahrzeugs 100 wird die Bremsanlage mittels eines Bremspedals 103 betätigt. Aufgrund einer Betätigung des Bremspedals 103 wird über einen in der Figur nicht dargestellten Bremskraftverstärker ein Bremsdruck in einem Hauptzylinder 104 aufgebaut. Über eine Hydraulikeinheit 105 kann der Bremsdruck an die Radbremsen 106VL, 106VR, 106HL, 106HR übertragen werden. Hierfür sind Hydraulikleitungen vorgesehen, die aus Gründen der Übersichtlichkeit in Figur 1 nicht dargestellt sind. Die Radbremsen 106VL, 106VR, 106HL, 106HR umfassen einen fahrzeugfest angebrachten Bremskolben, der gegen eine radfest montierte Bremsscheibe gepresst wird, wenn die Radbremsen 106VL, 106VR, 106HL, 106HR mit Druck beaufschlagt werden, wodurch ein Bremsmoment erzeugt wird. Die Hydraulikeinheit 105 ist in einer dem Fachmann an sich bekannten Art ausgeführt und ermöglicht eine fahrerunabhängige Einstellung des Bremsdrucks in den Radbremsen 106VL, 106VR, 106HL, 106HR. Insbesondere kann der Bremsdruck in den Radbremsen 106VL, 106VR, 106HL, 106HR mittels der Hydraulikeinheit 104 selbsttätig erhöht werden.

Ferner verfügt das Egofahrzeug 100 in einer Ausgestaltung über eine Fahrzustandssensorik 110. Diese umfasst insbesondere Raddrehzahlsensoren, aus deren Signalen die Längsgeschwindigkeit des Egofahrzeugs 100 bestimmt werden kann, einen Gierratensensor zur Bestimmung der Gierrate des Egofahrzeugs 100 und gegebenenfalls einen Querbeschleunigungssensor zum Bestimmen der Querbeschleunigung des Egofahrzeugs 100. Vorzugsweise umfasst die Fahrzustandssensorik 110 ferner einen innerhalb des Lenkstrangs 108 angeordneten Lenkwinkelsensor zur Erfassung des Einschlagswinkels der lenkbaren Vorderräder 107VL, 107VR. Mithilfe der Messdaten der Fahrzustandssensorik 110 lässt sich insbesondere der jeweils aktuelle fahrdynamische Zustand des Egofahrzeugs 100 bestimmen.

Zur Erfassung von Umfeldobjekten 112 im Umfeld des Egofahrzeugs 100 kann dieses zudem über eine Umfeldsensorik 111 verfügen. Die Umfeldsensorik 111 umfasst beispielsweise einen Radarsensor mit einem Erfassungsbereich 113, der einem Raumwinkelbereich vor dem Egofahrzeug 100 entspricht. Alternativ oder zusätzlich zu dem Radarsensor kann die Umfeldsensorik 111 beispielsweise einen Lidar-, Infrarot- oder Videosensor enthalten. Ferner kann der Erfassungsbereich 113 der Umfeldsensorik 111 mittels geeigneter Umfeldsensoren auch derart erweitert werden, dass er zusätzlich das seitliche und/oder hintere Umfeld des Egofahrzeugs 100 umfasst. Mittels der Umfeldsensorik 111 werden die Relativposition und die Relativgeschwindigkeiten sowie die relative Bewegungsrichtung der in ihrem Erfassungsbereich 113 befindlichen Umfeldobjekte 112 in Bezug auf das Egofahrzeug 100 bestimmt.

Die mittels der zuvor beschriebenen Sensorik 110, 110 erfassten Daten werden innerhalb des Egofahrzeugs 100 einem Sicherheitssystem 114 zugeführt, welches anhand der erfassten Messdaten Gefahrensituationen ermittelt und bei Vorliegen einer Gefahrensituation Sicherheitsmittel 116 des Egofahrzeugs 100 ansteuert, um die Gefahr abzuwenden oder zu verringern. Das Sicherheitssystem 114 ist vorzugsweise Bestandteil eines elektronischen Steuergeräts des Egofahrzeugs 100. Das Steuergerät umfasst einen Mikroprozessor zur Ausführung von Programmen, die in dem Steuergerät gespeichert sind, wobei das Sicherheitssystem 114 als ein Programmmodul des Steuergeräts ausgestaltet ist oder mehrere Programmmodule des Steuergeräts umfasst.

Neben den Messdaten der fahrzeugeigenen Umfeldsensorik 111 und Fahrzustandssensorik 110 werden dem Sicherheitssystem 114 Informationen bezüglich Gefahrensituationen zugeführt, die von Informationsquellen außerhalb des Egofahrzeugs 100 bereitgestellt und mittels einer Empfangseinrichtung 118 in dem Egofahrzeug 100 empfangen werden. Gleichfalls können auch mehrere Empfangseinrichtungen 118 vorgesehen werden, um Informationen von unterschiedlichen Typen von Informationsquellen empfangen zu können.

Wie in Figur 2 schematisch dargestellt, kann es sich bei den Informationsquellen um weitere Fahrzeuge 201 handeln, von denen in der Figur lediglich eines gezeigt ist. Das beispielhaft dargestellte Fahrzeug 201 verfügt über eine Sendeeinrichtung 202, die vorzugsweise als ein Funksender ausgestaltet ist. Mit der Sendeeinrichtung 202 können Informationen gesendet werden, die mittels der Empfangseinrichtung 118 des Egofahrzeugs 100 empfangbar sind, sofern sich das Egofahrzeug 100 innerhalb der Reichweite der Sendeeinrichtung 202 befindet. Die Datenübertragung von dem Fahrzeug 201 zu dem Egofahrzeug 100 basiert in einer Ausgestaltung auf der an sich bekannten DSRC-Technologie, die es erlaubt eine Ad-hoc-Verbindung zwischen zwei Fahrzeugen herzustellen. Gleichfalls können jedoch auch anderen Kommunikationstechnologien, wie beispielsweise WLAN (Wireless Local Area Network), UTMS, GPRS, LTE, WiMax, Bluetooth, oder dergleichen, verwendet werden, um Informationen von dem Fahrzeug 201 zu dem Egofahrzeug 100 zu übertragen. Die Reichweite der Sendeeinrichtung 202 beträgt beispielsweise einige hundert Meter.

Das weitere Fahrzeug 201 verfügt ferner über eine Positionsbestimmungseinrichtung 203, die es ermöglicht, die Position des Fahrzeugs 201 festzustellen und mittels der Sendeeinrichtung 202 an andere Fahrzeuge zu melden. Vorzugsweise erlaubt die Positionsbestimmungseinrichtung 203, die Position des Fahrzeugs 201 fahrspurgenau zu bestimmen, d.h., mit einer Genauigkeit, die es ermöglicht, das Fahrzeug 201 eindeutig einer Fahrspur einer Straße zuzuordnen. Vorzugsweise kann mittels der Positionsbestimmungseinrichtung 203 zudem eine Ausrichtung des Fahrzeugs 201 bestimmt werden, aus der seine Bewegungsrichtung ermittelt werden kann und die sich etwa auf eine festgelegte Himmelsrichtung bezieht. Die Positionsbestimmungseinrichtung 203 kann beispielsweise ein satellitengestütztes Ortungssystem umfassen, das auf dem GPS (Global Positioning System) oder auf dem europäischen Satellitennavigationssystem Galileo basiert.

Vorzugsweise verfügt das Fahrzeug 201 ferner über eine Fahrzeugsensorik 204, mit der Informationen über den Bewegungszustand des Fahrzeugs 201 erfasst werden können. Hierbei handelt es sich insbesondere um die Fahrzeuggeschwindigkeit und möglicherweise die Beschleunigung des Fahrzeugs 201. Ferner können weitere den Bewegungszustand beschreibende Informationen, wie etwa die Gierrate und/oder der Lenkwinkel erfasst werden, die es ermöglichen, eine voraussichtliche Trajektorie des Fahrzeugs 201 zu berechnen bzw. zu schätzen.

Anhand der in der Positionsbestimmungseinrichtung 203 ermittelten Position und Ausrichtung des Fahrzeugs 201 und anhand der mittels der Fahrzeugsensorik 204 erfassten Informationen über den Bewegungszustand des Fahrzeugs 201 generiert eine Verarbeitungseinrichtung 206 Positionsmeldungen, die von der mit der Verarbeitungseinrichtung 206 verbundenen Sendeeinrichtung 202 ausgesendet werden. Vorzugsweise werden dabei Positionsmeldungen regelmäßig in vorgegebenen Zeitabständen jeweils anhand aktualisierter Informationen erzeugt und ausgesendet, so dass weiteren Fahrzeugen fortlaufend aktualisierte Informationen zur Verfügung gestellt werden, welche die Position und den Bewegungszustand des Fahrzeugs 201 beschreiben.

Darüber hinaus ist das Fahrzeug 201 in Ausgestaltungen der Erfindung in der Lage mögliche Gefahrensituationen für anderen Verkehrsteilnehmer zu erkennen und mittels der Sendeeinrichtung 202 an weitere Fahrzeuge zu melden. Vorzugsweise ist dabei ein Katalog möglicher Gefahrensituationen vorgegeben, denen jeweils Kriterien zu ihrer Erkennung zugeordnet sind. Weiterhin können für die vorgegebenen Gefahrensituationen Angaben vorgegeben werden, die in eine Meldung der Gefahrensituation aufgenommen werden, um anderen Fahrzeugen eine Einschätzung der Gefahrensituation zu ermöglichen. Hierzu zählt insbesondere die Position der Gefahrenstelle, an der die Gefahrensituation besteht. Ferner können weitere Angaben bereitgestellt werden, die beispielsweise das Ausmaß der Gefahrensituation beschreiben.

Derartige Gefahrensituationen können insbesondere sicherheitskritische Fahrsituationen des Fahrzeugs 201 sein, die mittels der Fahrzeugsensorik 204 erfasst werden können. Beispielsweise kann ein verringerter Fahrbahnreibwert oder eine größere Fahrbahnunebenheit mittels der Fahrzeugsensorik 204 bestimmt werden, sofern geeignete Sensoren vorhanden sind. Andere Beispiele sind Gefahrensituationen, die erkannt werden, wenn ein Sicherheitsmittel des Fahrzeugs 201, wie beispielsweise ein Airbag, ausgelöst worden ist. Die Erfindung ist dabei keineswegs auf die zuvor genannten Beispiele beschränkt, sondern es kann grundsätzlich jede Gefahrensituation gemeldet werden, die mittels des vorhandenen Fahrzeugsensorik 204 erfasst werden kann.

Darüber hinaus kann es auch vorgesehen sein, dass Gefahrensituationen im Umfeld des Fahrzeugs 201 erfasst werden. Hierzu ist das Fahrzeug 201 mit einer Umfeldsensorik 205 ausgerüstet, die beispielsweise ähnlich oder in der gleichen Weise ausgestaltet sein kann, wie die Umfeldsensorik 111 des Egofahrzeugs 100. Mittels der Umfeldsensorik 205 wird die Verkehrssituation im Umfeld des Fahrzeugs 201 erfasst, und daraufhin überprüft, ob sie mögliche Gefahren für das Fahrzeug 201 oder andere Verkehrsteilnehmer aufweist, die in dem vorgegebenen Katalog enthalten sind. Beispiele hierfür sind wiederum einzelne stehende bzw. langsame Fahrzeuge oder Hindernisse, die sich auf oder neben einer Straße bzw. Fahrspur befinden, in der sich das Fahrzeug 201 bewegt, oder ein Stau auf einer Fahrspur des Fahrzeugs 201 oder einer anderen Fahrspur. Ein weiteres Beispiel ist ein mittels der Umfeldsensorik 205 erfasster Geisterfahrer auf einer Straße. Über diese Beispiele hinaus kann grundsätzlich jede Gefahrensituation an weitere Fahrzeuge gemeldet werden, die mittels der vorhandenen Umfeldsensorik 205 erkannt werden kann.

Wenn mittels der Fahrzeugsensorik 204 und/oder der Umfeldsensorik 205 des Fahrzeugs 201, eine Gefahrensituation erkannt worden ist, dann erzeugt die Verarbeitungseinrichtung 206 vorzugsweise eine Warninformation. Diese spezifiziert die Gefahrensituation, wofür beispielsweise ein in dem vorgegebenen Katalog festgelegter Gefahrencode verwendet werden kann, und enthält zusätzlich Informationen, die benötigt werden, um die Gefahrensituation einschätzen zu können. Wie zuvor erwähnt, umfassen diese Informationen insbesondere die Position der Gefahrenstelle sowie gegebenenfalls weitere Angaben. Mittels der Sendeeinrichtung 202 wird die in der Verarbeitungseinrichtung 206 erzeugte Warninformation ausgesendet, so dass sie von anderen Fahrzeugen empfangen werden kann. Wie bei den Positionsmeldungen werden vorzugsweise in regelmäßigen Zeitabständen aktualisierte Warninformationen generiert und ausgesendet, sofern eine Gefahrensituation besteht. Hierdurch werden andere Verkehrsteilnehmer fortwährend über die in dem Fahrzeug 201 erkannten Gefahrensituationen und deren Entwicklung informiert. Sofern mehrere Gefahrensituationen erkannt werden, kann zu jeder einzelnen Gefahrensituation jeweils eine Warninformation erzeugt und ausgesendet werden.

Darüber hinaus können in dem Egofahrzeug 100 mittels der Empfangseinrichtung 118 Warninformationen von stationären Sendestationen 207 empfangen werden. Die Sendestationen 207 können beispielsweise Informationen zu Gefahrensituationen aussenden, die mittels eines Verkehrsüberwachungssystems erfasst worden sind, welches den Verkehr auf einem Abschnitt einer Straße überwacht. Hierbei kann es sich insbesondere um die gleichen Gefahrensituationen handeln, die auch mittels der Umfeldsensorik 205 des Fahrzeugs 201 erfassbar sind. Ferner können mithilfe entsprechender Verkehrsüberwachungssysteme auch weitere mögliche Gefahrensituationen erkannt werden. Die erfassbaren Gefahrensituationen sind dabei ebenfalls in dem zuvor erwähnten Katalog spezifiziert. Vorzugsweise sind die von den stationären Sendestationen 207 ausgesendeten Warninformationen in der gleichen Weise aufgebaut, wie die von dem Fahrzeug 201 ausgesendeten Warninformationen. Dies bedeutet, dass sie die Gefahrensituationen spezifizieren sowie weitere Angaben, wie insbesondere die Positionen der Gefahrenstelle, enthalten.

Die Sendestation 207 kann beispielsweise Bestandteil eines Verkehrsüberwachungssystems sein, welches die Verkehrsituation auf einem bestimmten Straßenabschnitt überwacht. Derartige Verkehrsüberwachungssysteme werden beispielsweise in Tunneln eingesetzt, um die Verkehrssicherheit zu erhöhen. Des Weiteren können Sendeeinrichtungen 207 an bestimmten potenziellen Gefahrenstellen angebracht werden, beispielsweise im Bereich von Hindernissen auf einer Straße oder einer Ampelanlage, um auf das Hindernis bzw. die Ampelstellung aufmerksam zu machen. Weiterhin kann es sich bei der Sendestation 207 um einen Rundfunksender handeln, der Warninformationen sendet, die Gefahrensituationen bzw. Gefahrenstellen angeben. Ein Beispiel für solche Warninformationen sind dem Fachmann an sich bekannte TMC-Informationen (TMC: Traffic Message Channel), die von Rundfunkanbietern bereitgestellt werden.

Wenn mittels der Empfangseinrichtung 118 eine Positionsmeldung eines weiteren Fahrzeugs 201 oder eine Warninformation empfangen wird, dann wird die Positionsmeldung oder Warninformation an das Sicherheitssystem 114 weitergeleitet, um sie auszuwerten.

Die Positionsmeldungen und Warninformationen werden dabei zusätzlich zu den Messdaten der Umfeldsensorik 111 und der Fahrzustandssensorik 110 berücksichtigt, um die Sicherheitsmittel 116 des Egofahrzeugs 100 anzusteuern. Dabei können anhand der empfangenen Positionsmeldungen die Positionen weiterer Fahrzeuge 201 angegeben werden, die auch mittels der Umfeldsensorik 111 des Egofahrzeugs 100 erfasst werden. Gleichfalls können jedoch auch Positionen weiterer Fahrzeuge 201 gemeldet werden, die mittels der Umfeldsensorik 111 nicht erfassbar sind, weil sie sich außerhalb des Erfassungsbereichs 113 befinden. Gleichfalls können die Warninformationen über Gefahrensituationen informieren, die ebenfalls mittels der Umfeldsensorik 111 erfasst werden oder die nicht erfassbar sind, weil die Gefahrenstelle außerhalb des Erfassungsbereichs 113 der Umfeldsensorik 111 liegt. Somit kann das Sicherheitssystem 114 auch auf Gefahren reagieren, die nicht mittels der Umfeldsensorik 111 erkannt werden können.

Ferner können sich Warninformationen und Positionsmeldungen die von unterschiedlichen Quellen 201, 207 empfangen werden, auf dieselbe Gefahrensituationen beziehen. So kann beispielsweise ein Stauende auf einer Fahrspur anhand einer Positionsmeldung eines am Stauende befindlichen Fahrzeugs 201, einer Warninformation eines entgegenkommenden Fahrzeugs 201 und einer Warninformation einer stationären Sendeeinrichtung 207 erkannt werden.

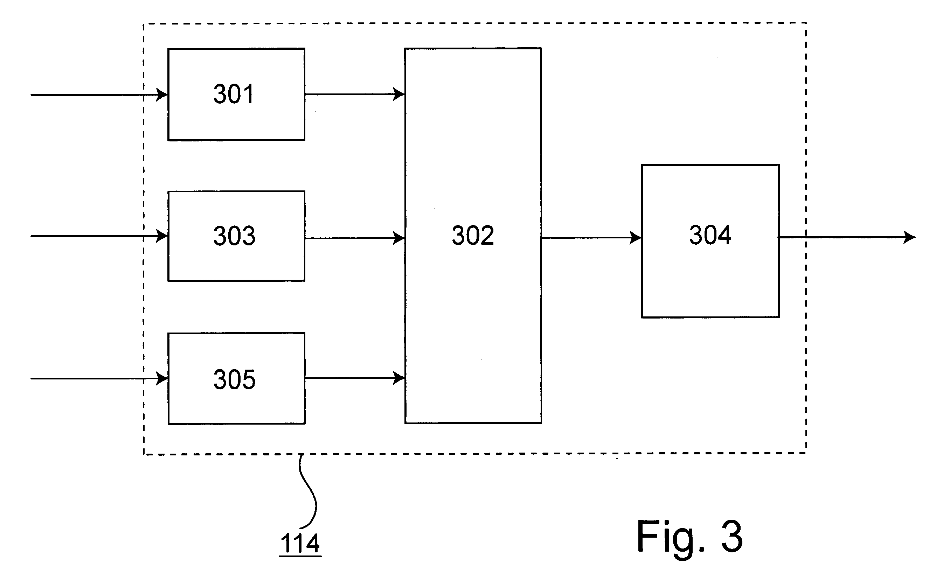

Das Sicherheitssystem 114 ist in einer Ausgestaltung in dem schematischen Blockdiagramm in Figur 3 dargestellt. In der dargestellten Ausgestaltung umfasst das Sicherheitssystem 114 eine Situationsbewertungseinrichtung 301, eine Auswerteeinrichtung 303 sowie eine Bewertungseinrichtung 305, welche die Eingangssignale des Sicherheitssystems 114 auswerten, die insbesondere von der Umfeldsensorik 111 und der Empfangseinrichtung 118 geliefert werden. Die Ergebnisse dieser Auswertung werden einer Entscheidungseinrichtung 302 zugeführt, welche anhand der Auswertungsergebnisse eine Sicherheitsmaßnahme ermittelt, wenn dies erforderlich ist. Die Sicherheitsmaßnahme wird dann durch eine Ansteuerung der Sicherheitsmittel 116 des Egofahrzeugs 100 umgesetzt, die mittels der Steuereinrichtung 304 vorgenommen wird.

Die Situationsbewertungseinrichtung 301 wertet die Messdaten der Umfeldsensorik 111 und der Fahrzustandssensorik 110 des Egofahrzeugs 100 aus, um potenzielle Gefahrensituationen anhand der Messdaten der Umfeldsensorik 111 und der Fahrzustandssensorik 110 zu ermitteln. Hierbei handelt es sich insbesondere um Fahrsituationen, in denen das Egofahrzeug 100 mit einem Umfeldobjekt 112, beispielsweise einem anderen Kraftfahrzeug, mit einer bestimmten Wahrscheinlichkeit kollidieren könnte. Zur Ermittelung einer möglichen Kollision berechnet die Situationsbewertungseinrichtung 301 vorzugsweise relative Trajektorien der mittels der Umfeldsensorik 111 erfassten Umfeldobjekte 112 in Bezug zu dem Egofahrzeug 100. Hierzu werden die mittels der Umfeldsensorik 111 erfassten Informationen herangezogen, welche die Bewegung des Umfeldobjekts 112 beschreiben sowie Information über den fahrdynamischen Zustand des Egofahrzeugs 100, die mittels der Fahrzustandssensorik 110 erfasst werden. Im Falle einer ermittelten Kollision wird die Kollisionszeit bestimmt, d.h. die Zeitspanne bis zu der möglichen Kollision und vorzugsweise eine berechnete Position der Kollision. Ferner können weitere Information berechnet werden, wie etwa eine geschätzte Aufprallgeschwindigkeit und/oder der Aufprallwinkel, den das Egofahrzeug 100 und das Umfeldobjekt 112 bei der Kollision voraussichtlich zueinander einnehmen. Die ermittelten Informationen bezüglich einer möglichen Kollision werden der Entscheidungseinrichtung 302 übergeben.

Positionsmeldungen anderer Fahrzeuge 201, die mittels der Empfangseinrichtung 118 empfangen werden, werden in der dargestellten Ausgestaltung des Sicherheitssystems 114 von einer Bewertungseinrichtung 305 ausgewertet. Dies geschieht mit dem Ziel, eine mögliche Kollision zwischen dem Egofahrzeug 100 und demjenigen Fahrzeug 201 zu ermitteln, welches die Positionsmeldung gesendet hat.

Hierzu wird die in der Positionsmeldung enthaltenen Position und der angegebene Bewegungszustand des anderen Fahrzeugs 201 in Bezug gesetzt zu der Position des Egofahrzeugs 100 und dessen Bewegungszustand. Die eigene Position des Egofahrzeugs 100 wird dabei mittels einer mit der Bewertungseinrichtung 305 gekoppelten Positionsbestimmungseinrichtung 119 bestimmt. Die Positionsbestimmungseinrichtung 119 kann gleichermaßen wie die Positionsbestimmungseinrichtung 203 des anderen Fahrzeugs 201 ein satellitengestütztes Ortungssystem umfassen. Der Bewegungszustand des Egofahrzeugs 100 wird mittels der Fahrzustandssensorik 110 bestimmt. Insbesondere kann aus den in einer Positionsmeldung enthaltenen Informationen über die Position und den Bewegungszustand des anderen Fahrzeugs 201 unter Heranziehung der Position und der Fahrzustandsdaten des Egofahrzeugs 100 eine relative Trajektorie des anderen Fahrzeugs 201 in Bezug zu dem Egofahrzeug 100 berechnet werden, um ähnlich wie in der Situationsbewertungseinrichtung 301 eine mögliche Kollision mit dem anderen Fahrzeug 201 zu ermitteln.

Im Falle einer möglichen Kollision werden von der Bewertungseinrichtung 305 Informationen bezüglich der Kollision bereitgestellt, die den von der Situationsbewertungseinrichtung 301 bereitgestellten Daten gleichen können. Insbesondere kann gleichfalls die Kollisionszeit und/oder die Position der Kollision berechnet werden. Wenn die vorliegenden Informationen dies zulassen, können ferner weitere Informationen bereitgestellt werden, wie etwa die zuvor genannten Informationen zu Aufprallgeschwindigkeit und Aufprallwinkel. Die Informationen zu der möglichen Kollision werden von der Bewertungseinrichtung 305 an die Entscheidungseinrichtung 302 übergeben. Positionsmeldungen eines Fahrzeugs 201 mit der das Egofahrzeug 100 nicht oder nur mit einer sehr geringen Wahrscheinlichkeit kollidieren kann, werden vorzugsweise verworfen.

Mittels der Empfangseinrichtung 118 empfangene Warninformationen werden in der Auswerteeinrichtung 303 ausgewertet. Diese prüft insbesondere anhand der in den Warninformationen enthaltenen Positionsangaben, ob das Egofahrzeug 100 die angegebene Gefahrenstelle innerhalb einer vorgegebenen Zeitspanne erreichen kann. Hierzu setzt die Auswerteeinrichtung 303 die in der Warninformation angegebene Position in Bezug zu der mittels der Positionsbestimmungseinrichtung 119 ermittelten Position des Egofahrzeugs 100 und dessen mit der Fahrzustandssensorik 110 ermittelter Geschwindigkeit. In einer Ausgestaltung kann auch durch einen Abgleich mit Kartendaten, welche eine Straßennetz der geografischen Region enthalten, in der sich das Egofahrzeug 100 befindet, ermittelt werden, ob die Gefahrenstelle auf der Straße liegt, auf der sich das Egofahrzeug 100 aktuell befindet und das Egofahrzeug 100 die Gefahrenstelle bei dem bestehenden Straßenverlauf aufgrund seiner Geschwindigkeit innerhalb der Zeitspanne erreichen könnte.

Wenn festgestellt wird, dass das Egofahrzeug 100 die Gefahrenstelle innerhalb der vorgegebenen Zeitspanne erreichen wird, dann wird die Warninformation an die Entscheidungseinrichtung 302 weitergeleitet. Vorzugsweise geschieht dies unter Angabe der Zeitspanne bis zum Erreichen der Gefahrenstelle. Im Falle eines in der Warninformation angegeben anderen Fahrzeugs oder weiteren Hindernisses, mit dem das Egofahrzeug 100 kollidieren könnte, entspricht diese Zeitspanne der Kollisionszeit. Wenn die Gefahrenstelle von dem Egofahrzeug 100 nicht innerhalb der vorgegebenen Zeitspanne erreicht wird, dann wird die Warninformation verworfen.

Die Entscheidungseinrichtung 302 ermittelt für die gemeldeten Gefahren vorzugsweise jeweils ein Gefahrenpotenzial, das ein Maß für die bestehende Gefahr darstellt. Im Falle einer drohenden Kollision mit einem anderen Fahrzeug 201 bzw. einem Umfeldobjekt 112, die anhand von Messdaten der Umfeldsensoren 111 anhand einer Positionsmeldung eines anderen Fahrzeugs 201 und anhand einer Warninformation ermittelt werden kann, wird das Gefahrenpotenzial insbesondere in Abhängigkeit von der Kollisionszeit bestimmt, wobei kürzere Kollisionszeiten zu einem höheren Gefahrenpotenzial führen. Sofern weitere Informationen bezüglich einer drohenden Kollision bereitgestellt werden, können diese ebenfalls bei der Ermittlung des Gefahrenpotenzials herangezogen werden. Weiteren gemeldeten Gefahren wird vorzugsweise ebenfalls ein Gefahrenpotenzial zugeordnet, das beispielsweise aus der jeweiligen Art der Gefahr und der Zeitspanne bis zum Erreichen der Gefahrenstelle ermittelt wird.

Darüber hinaus vergleicht die Entscheidungseinrichtung 302 verschiedene Informationen über Gefahrensituationen, die von unterschiedlichen Informationsquellen geliefert worden sind, miteinander. Hierbei wird insbesondere ermittelt, ob eine bestimmte Gefahrensituation von mehreren Informationsquellen gemeldet bzw. erkannt worden ist. Unterschiedliche Informationsquellen können die Umfeldsensorik 111 und/oder die Fahrzustandssensorik 110 des Egofahrzeugs 100, ein oder mehrere andere Fahrzeuge 201 und ein oder mehrere Sendestationen 207 sein. Um die unterschiedlichen Informationen einer einzigen oder verschiedenen Gefahrensituationen zuordnen zu können, können insbesondere die gemeldeten bzw. anhand der bereitgestellten Informationen ermittelten Positionen einer Kollision bzw. einer Gefahrenstelle miteinander verglichen werden. Stimmen diese innerhalb vorgegebener Toleranzen überein, wird festgestellt, dass es sich um dieselbe Gefahrensituation handelt. Andernfalls wird von verschiedenen Gefahrensituationen ausgegangen. Gleichfalls können weitere Angaben herangezogen werden, beispielsweise Angaben über die Art der möglichen Gefahr.

Ferner werden aktuell erfasste bzw. empfangene Informationen zu Gefahrensituationen mit Informationen verglichen, die zuvor bereits empfangen worden sind, um zu ermitteln, ob eine einmal gemeldete Gefahr weiterhin besteht bzw. bestätigt wird, oder ob die Gefahr nicht erneut gemeldet wird. Insbesondere kann dabei ermittelt werden, ob ein anderes Fahrzeug oder ein weiteres Hindernis, mit dem das Egofahrzeug 100 kollidieren könnte, zuvor bereits gemeldet worden ist und ob die aktuelle Position des Egofahrzeugs bzw. Hindernisses konsistent mit zuvor erfassten Informationen über die Position und den Bewegungszustand ist.

Aufgrund der zuvor beschriebenen statistischen Auswertungen bestimmt die Entscheidungseinrichtung 302 die einzelnen bestehenden Gefahren. Zudem kann ermittelt werden, mit welcher Wahrscheinlichkeit eine Gefahrensituationen tatsächlich besteht. Sofern die Gefahrensituation mittels der Umfeldsensorik 111 und/oder der Fahrzustandssensorik 110 erfasst worden ist, ist diese Wahrscheinlichkeit sehr hoch. Wenn die Gefahrensituation lediglich von externen Quellen gemeldet wird, ergibt sich die Wahrscheinlichkeit für das tatsächliche Vorliegen der Gefahrensituationen aus der Anzahl unterschiedlicher Informationsquellen, welche die Gefahrensituation melden sowie aus der Konsistenz von aktuell empfangenen und zuvor gemeldeten Informationen. Dabei ist die Wahrscheinlichkeit umso größer, je mehr Informationsquellen eine Gefahr melden und je größer die Konsistenz mit zuvor gemeldeten Daten ist.

Aufgrund der vorgenommenen Auswertung bestimmt die Entscheidungseinrichtung 302 Maßnahmen zur Beseitigung und/oder Verringerung der bestehenden Gefahr. Die möglichen Maßnahmen sind vorzugsweise mehreren Stufen zugeordnet, die sich im Hinblick darauf unterscheiden, ob die Ansteuerung der Sicherheitsmittel 116 von dem Fahrer des Egofahrzeugs 100 wahrgenommen wird, ob ein Eingriff in das Fahrverhalten des Egofahrzeugs 100 vorgenommen wird, und im Hinblick darauf, in welchem Maße gegebenenfalls in das Fahrverhalten des Egofahrzeugs 100 eingegriffen wird. In einer Ausgestaltung sind die möglichen Maßnahmen in drei Stufen unterteilt. In der niedrigsten Stufe erfolgt eine Warnung des Fahrers, in der zweiten Stufe erfolgt eine Vorkonditionierung des Egofahrzeugs 100, und die höchste Stufe umfasst automatische Eingriffe in das Fahrerhalten des Egofahrzeugs 100. Gleichfalls können jedoch auch andere oder mehr Stufen vorgesehen sein. Beispielsweise können mehrere Warnstufen vorgesehen sein, die sich in der Wahrnehmbarkeit der Warnung unterscheiden, oder es können mehrere Stufen für automatische Eingriffe in das Fahrverhalten vorgesehen sein, die sich im Hinblick auf die stärke der Eingriffe unterscheiden.

Zur Ausgabe von Warnungen umfassen die Sicherheitsmittel 116 Warneinrichtungen zur optischen, akustischen oder haptischen Warnung des Fahrers. Die Warneinrichtungen sind in Figur 1 schematisch anhand des Blocks 115 dargestellt. Optische Warnungen können beispielsweise mittels eines von dem Fahrer des Egofahrzeugs 100 einsehbaren Displays und/oder mittels einer Warnleuchte ausgegeben werden, die etwa in einer Armaturentafel des Egofahrzeugs 100 oder an einem Außenspiegel angeordnet ist. Dabei kann eine am Außenspiegel angeordnete Warnleuchte beispielsweise auf ein sich von hinten näherndes weiteres Fahrzeug aufmerksam machen, dass mittels der Umfeldsensorik 111 oder anhand einer Positionsmeldung ermittelt wurde. Akustische Warnungen umfassen beispielsweise Ansagen oder Warntöne, die mittels eines Lautsprechers bzw. mittels eines in dem Egofahrzeug 100 vorgesehenen Audiosystems ausgegeben werden können. Haptische Warnungen können etwa mittels eines in dem Lenkstrang 108 angeordneten Lenkaktors ausgegeben werden, indem dieser das Lenkrad 109 kurzzeitig mit einem Drehmoment beaufschlagt. Alternativ oder zusätzlich kann das Egofahrzeug 100 auch durch eine kurzzeitige mittels der Hydraulikeinheit 105 ausgeführten Bremsdruckerhöhung abgebremst werden, so dass ein Bremsruck verursacht wird, welcher den Fahrer auf eine Gefahrsituation aufmerksam macht.

Maßnahmen zur Vorkonditionierung des Egofahrzeugs 100 umfassen in einer Ausgestaltung Maßnahmen zur Erhöhung der passiven Sicherheit. Zur Durchführung derartiger Maßnahmen können die Sicherheitsmittel 116 eine oder mehrere entsprechende Einrichtungen enthalten, die in Figur 1 als Block 117 dargestellt sind. Insbesondere können dabei reversible Gurtstraffer eingesetzt werden, mit denen die von den Fahrzeuginsassen angelegten Sicherheitsgurte angezogen werden können, um die Fahrzeuginsassen im Falle einer Kollision besser sichern zu können. Darüber hinaus können in dem Egofahrzeug 100 Einrichtungen zum Verstellen der Sitzposition der Fahrzeuginsassen vorgesehen werden, welche die Fahrzeuginsassen durch eine Verstellung der Sitze in eine günstige Position bringen, sowie Einrichtungen, mit denen Fenster und/oder ein Schiebedach des Egofahrzeugs 100 bei einer drohenden Kollision geschlossen werden können, um das Eindringen von Gegenständen in das Egofahrzeug 100 zu verhindern. Ferner können die Sicherheitsmittel 116 Einrichtungen 117 zur Vorkonditionierung von irreversiblen Sicherheitsmitteln, wie Airbags und/oder pyrotechnischen Gurtstraffern, umfassen, welche die Auslöseschwellen der irreversiblen Sicherheitsmittel im Falle einer möglichen Kollision herabsetzen, so dass die irreversiblen Sicherheitsmittel bei einer Kollision rascher ansprechen.

Die Sicherheitsmittel 116 umfassen in einer Ausgestaltung ebenfalls die Hydraulikeinheit 105, mit der insbesondere die Bremsanlage des Egofahrzeugs 100 vorkonditioniert werden kann, um im Falle einer Bremsenbetätigung des Fahrers einen rascheren Bremsdruckaufbau zu gewährleisten. So können die Radbremsen 106VL, 106VR, 106HL, 106HR für einen nachfolgenden Bremsvorgang vorkonditioniert werden, indem beispielsweise ein geringer Bremsdruck aufgebaut wird, durch den ein Lüftspiel zwischen den Bremskolben und der Bremsschreibe verringert bzw. beseitigt wird. Entsprechend kann auch bei elektro-hydraulischen oder elektro-mechanischen Bremsen das Lüftspiel reduziert werden.

Zudem ist es möglich, Schwellen zur Auslösung bestimmter Funktionen der Hydraulikeinheit 105 zu beeinflussen, um diese Funktionen im Falle einer drohenden Kollision rascher auslösen zu können. Ein Beispiel für eine derartige Funktion ist ein an sich bekannter hydraulischer Bremsassistent (HBA), bei dem ein von dem Fahrer in der Bremsanlage eingestellter Bremsdruck in einer kritischen Fahrsituation auf einen Maximalwert erhöht wird, um eine maximale Verzögerung zu gewährleisten. Die Funktion wird üblicherweise aktiviert, wenn der Bremspedalgradient, d.h. die Geschwindigkeit, mit welcher der Fahrer das Bremspedal eintritt, oder Bremsdruckgradient, d.h. die Änderungsrate des Bremsdrucks innerhalb eines Hauptzylinders 104 der Bremsanlage, einen vorgegebenen Auslöseschwellenwert überschreitet. Durch eine Absenkung dieses Auslöseschwellenwerts kann der HBA rascher ausgelöst werden, so dass sich der Bremsweg des Egofahrzeugs 100 verkürzt.

Darüber erlaubt die Hydraulikeinheit 105 auch Eingriffe in das Fahrverhalten des Egofahrzeugs 100. Dabei kann durch eine entsprechende Ansteuerung der Hydraulikeinheit 105 ein automatischer Bremsvorgang mit einer vorgegebenen Verzögerung durchgeführt werden, um eine drohende Kollision zu vermeiden, oder die Aufprallgeschwindigkeit herabzusetzen. Die Verzögerung kann insbesondere in Abhängigkeit von der Kollisionszeit berechnet werden. Entsprechend kann auch bei elektro-hydraulischen oder elektro-mechanischen Bremsen ein automatischer Bremsvorgang mit einer vorgegebenen Verzögerung durchgeführt werden.

Von der Entscheidungseinrichtung 302 werden die durchzuführenden Maßnahmen in Abhängigkeit von der Art der Gefahrensituation, d.h. insbesondere in Abhängigkeit von dem ermittelten Gefahrenpotenzial, und den Informationsquellen ermittelt, auf welche die Informationen bezüglich der Gefahrensituation zurückgehen. Dabei wird vor allem berücksichtigt, dass Informationen die von außerhalb des Egofahrzeugs 100 mittels der Empfangseinrichtung 118 empfangen werden, unter Umständen eine geringere Zuverlässigkeit aufweisen können und eine Gefahrensituation in der Regel weniger genau beschrieben, als die Messdaten, die mittels der Umfeldsensorik 111 erfasst worden sind.

Sofern eine drohende Kollision von der Situationsbewertungseinrichtung 301 aufgrund einer Auswertung der mittels der Umfeldsensorik 111 erfassten Messdaten gemeldet wird, ermittelt die Entscheidungseinrichtung 302 die durchzuführende Maßnahme in Abhängigkeit von einem Gefahrenpotenzial der erfassten Gefahrensituation. Mit steigendem Gefahrenpotenzial werden dabei Maßnahmen einer höheren Stufe durchgeführt. Dies bedeutet insbesondere, dass bei einem geringen Gefahrenpotenzial eine Fahrerwarnung ausgegeben wird, und bei einem sehr hohen Gefahrenpotenzial auch Eingriffe in das Fahrverhalten des Egofahrzeugs 100 vorgenommen werden können, um eine Kollision zu verhindern.

Bei einer von der Bewertungseinrichtung 305 und/oder der Auswerteeinrichtung 303 nach einer Auswertung von mittels der Empfangseinrichtung 118 empfangenen Informationen gemeldeten Gefahrensituation, die von der Situationsbewertungseinrichtung 301 nicht gemeldet worden ist, wird die durchzuführende Maßnahme grundsätzlich ebenfalls anhand des ermittelten Gefahrenpotenzials und/oder der Art der Gefahrensituation bestimmt. Allerdings ist vorgesehen, die Stufe der durchzuführenden Maßnahme gegebenenfalls auf eine maximale Stufe zu begrenzen. Maßnahmen einer höheren als der maximale Stufe können dann nicht ausgeführt werden, auch wenn sie aufgrund des bestehenden Gefahrenpotenzials möglich bzw. erforderlich wären.

Zur Begrenzung der Stufe prüft die Entscheidungseinrichtung 302 vorzugsweise zunächst, ob die Gefahrensituation mittels der Umfeldsensorik 111 erkannt werden kann. Falls beispielsweise eine drohende Kollision mit einem weiteren Fahrzeug oder einem anderen Hindernis ermittelt worden ist, wird dies insbesondere dann festgestellt, wenn die aktuelle Position des Fahrzeugs 201 oder die Position des Hindernisses im Erfassungsbereich 113 der Umfeldsensorik 111 liegt. Ist dies nicht der Fall, wird festgestellt, dass die Gefahrensituation mittels der Umfeldsensorik 111 nicht erkannt werden kann.

Wenn die Entscheidungseinrichtung 302 in der zuvor beschriebenen Weise festgestellt hat, dass die Gefahrensituation mittels der Umfeldsensorik 111 erkannt werden kann, dann wird die Stufe der durchführbaren Maßnahmen begrenzt. In einer weiteren Ausgestaltung erfolgt dabei eine Begrenzung auf die niedrigste Stufe, die Fahrerwarnungen umfasst. Das bedeutet, dass bei einer Gefahrensituation, die anhand von Informationen ermittelt worden ist, die ihren Ursprung außerhalb des Egofahrzeugs 100 haben, unabhängig vom Gefahrenpotenzial lediglich eine Warnung ausgegeben werden kann, wenn die Gefahrensituation nicht mittels der Umfeldsensorik 111 des Egofahrzeugs 100 erfasst worden ist, obwohl dies möglich gewesen wäre. Gleichfalls kann auch das ermittelte Gefahrenpotenzial bei der Begrenzung der Stufe berücksichtigt werden, und bei einem höheren Gefahrenpotenzial kann auch eine Maßnahme der mittleren Stufe vorgesehen werden, die eine Vorkonditionierung des Egofahrzeugs 100 umfasst.

Sofern festgestellt wird, dass eine Gefahrensituation, die aufgrund einer Auswertung von Informationen ermittelt worden ist, die mittels der Empfangseinrichtung 118 empfangen worden sind, und nicht mittels der Umfeldsensorik 111 erfasst werden kann, werden Maßnahmen insbesondere anhand der zuvor beschriebenen statistischen Auswertung bestimmt. Dabei können die durchführbaren Maßnahmen auf eine bestimmte maximale Stufe begrenzt werden. Je geringer die statistische ermittelte Wahrscheinlichkeit dafür ist, dass die Gefahrensituation tatsächlich vorliegt, desto geringer wird die maximale Stufe gewählt. Ferner kann das ermittelte Gefahrenpotenzial einer Gefahrensituation bei der Begrenzung der Stufe berücksichtigt werden.

In einer Ausgestaltung ist vorgesehen, dass die ausführbaren Maßnahmen auf die niedrigste Stufe beschränkt werden, wenn das Vorliegen der Gefahrensituation nicht redundant festgestellt werden kann. Dies ist insbesondere dann der Fall, wenn die Gefahrensituation lediglich von einer Informationsquelle gemeldet worden ist und keine zuvor empfangenen Daten für eine ausreichende statistische Validierung vorliegen. Zusätzlich kann auch das Gefahrenpotenzial berücksichtigt werden. Dabei können beispielsweise dann Maßnahmen der nächsthöheren Stufe zugelassen werden, wenn die Gefahrensituation zwar nicht redundant festgestellt werden kann, jedoch ein sehr hohes Gefahrenpotenzial besitzt.

Sofern eine höhere Wahrscheinlichkeit für das tatsächliche Vorliegen der Gefahrensituation besteht, werden auch Maßnahmen der nächsten Stufe zugelassen, d.h. es kann auch eine Vorkonditionierung des Egofahrzeugs 100 vorgenommen werden. Eine höhere Wahrscheinlichkeit besteht insbesondere dann, wenn dieselbe Gefahrensituation wenigstens von einer vorgegebenen Anzahl von unabhängigen Informationsquellen gemeldet worden ist und/oder die Gefahrensituation bereits seit längerer Zeit gemeldet wird.

Maßnahmen der höchsten Stufe werden vorzugsweise nur dann zugelassen, wenn aufgrund einer vorgegebenen hohen Zahl von Redundanzen, die über einen vorgegebenen längeren Zeitraum ermittelt werden, eine sehr hohe Wahrscheinlichkeit dafür besteht, dass die Gefahrensituation tatsächlich vorliegt. So kann es beispielsweise vorgesehen sein, dass ein automatischer Bremsvorgang eingeleitet werden kann, wenn ein Stauende anhand von Informationen ermittelt wird, die über einen längeren Zeitraum von beispielsweise einigen Sekunden von mehreren anderen Fahrzeugen 201 gesendet werden, die sich auf derselben Fahrspur und im Gegenverkehr befinden, und wenn das Stauende zusätzlich von einer stationären Sendestation 207, beispielsweise einem Radiosender, gemeldet wird.

Die zuletzt beschriebene Strategie zur Bestimmung von Sicherheitsmaßnahmen, die vorgesehen ist, wenn eine Gefahrensituation aufgrund einer Auswertung von Informationen ermittelt worden ist, die mittels der Empfangseinrichtung 118 empfangen worden sind, und nicht mittels der Umfeldsensorik 111 erfasst werden kann, kann in der gleichen Weise auch angewandt werden, um Sicherheitsmaßnahmen zu ermitteln, wenn eine Umfeldsensorik 111 nicht verfügbar ist. Dies kann der Fall sein, wenn das Egofahrzeug 100 über keine Umfeldsensorik 111 verfügt oder wenn eine vorhandene Umfeldsensorik 111 defekt ist.

Obwohl die Erfindung in den Zeichnungen und der vorausgegangenen Darstellung im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten beziehungsweise Einrichtungen ausführen.

In den Patentansprüchen angegebene Bezugszeichen sind nicht als Beschränkungen der eingesetzten Mittel und Schritte anzusehen.

## Patentansprüche

1. Verfahren zum Erhöhen der Sicherheit in einem Fahrzeug (100), bei dem eine Gefahrensituation anhand von Informationen erkannt wird, die von wenigstens einer Informationsquelle (202; 207; 111) bereitgestellt werden, die innerhalb oder außerhalb des Fahrzeugs (100) angeordnet ist, und bei dem in dem Fahrzeug (100) eine Sicherheitsmaßnahme ausgeführt wird, die in Abhängigkeit von der Informationsquelle (202; 207; 111) bestimmt wird,
**dadurch gekennzeichnet, dass**
bei dem Verfahren abgestufte Sicherheitsmaßnahmen vorgesehen sind, wobei die auswählbaren Stufen auf eine vorgegebene maximale Stufe begrenzt werden können, und die höchste vorgesehene Stufe als maximale Stufe festgelegt wird, wenn eine Gefahrensituation anhand von Informationen ermittelt wird, die von einer Informationsquelle (111) innerhalb des Fahrzeugs (100) bereitgestellt werden.

2. Verfahren nach Anspruch 1 , bei dem eine innerhalb des Fahrzeugs (100) befindliche Informationsquelle (111) wenigstens einen Umfeldsensor (111) umfasst, wobei eine Gefahrensituation ermittelt wird, wenn anhand der mittels des Umfeldsensors (111) erfassten Umfelddaten eine drohende Kollision des Fahrzeugs (100) mit einem Umfeldobjekt (112) ermittelt wird.

3. Verfahren nach Anspruch 1 oder 2, bei dem Informationen, die von einer außerhalb des Fahrzeugs (100) angeordneten Informationsquelle (202; 207) bereitgestellt werden, mittels einer Kommunikationsschnittstelle (118), insbesondere mittels eines Funkempfängers (118), in dem Fahrzeug (100) empfangen werden.

4. Verfahren nach einem der vorangegangenen Ansprüche, bei dem eine außerhalb des Fahrzeugs (100) angeordnete Informationsquelle (202; 207) in einem weiteren Fahrzeug (201 ) angeordnet ist und/oder Bestandteil einer stationären Einrichtung (207) ist.

5. Verfahren nach einem der vorangegangenen Ansprüche, bei dem die Sicherheitsmaßnahme in Abhängigkeit von der Anordnung der Informationsquelle (202; 207; 111 ) in Bezug auf das Fahrzeug (100) ermittelt wird.

6. Verfahren nach einem der vorangegangenen Ansprüche, bei dem im Falle, dass eine Gefahrensituation nur anhand von Informationen ermittelt wird, die von wenigstens einer Informationsquelle (202; 207) außerhalb des Fahrzeugs (100) bereitgestellt werden, die maximale Stufe in Abhängigkeit von dem Ergebnis eines Vergleichs von Informationen bestimmt wird, die von verschiedenen Informationsquellen (202; 207) empfangen werden.

7. Verfahren nach einem der vorangegangenen Ansprüche, bei dem im Falle, dass eine Gefahrensituation nur anhand von Informationen ermittelt wird, die von wenigstens einer Informationsquelle (202; 207) außerhalb des Fahrzeugs (100) bereitgestellt werden, die maximale Stufe in Abhängigkeit von der Anzahl von außerhalb des Fahrzeugs (100) angeordneten Informationsquellen (202; 207) bestimmt wird, die Informationen bereitstellen, welche dieselbe Gefahrensituation beschreiben.

8. Verfahren nach einem der vorangegangenen Ansprüche, bei dem im Falle, dass eine Gefahrensituation nur anhand von Informationen ermittelt wird, die von wenigstens einer Informationsquelle (202; 207) außerhalb des Fahrzeugs (100) bereitgestellt werden, die maximale Stufe in Abhängigkeit von einer Zeitdauer bestimmt wird, innerhalb derer wenigstens eine Informationsquelle (202; 207) außerhalb des Fahrzeugs (100) Informationen bereitstellt, welche sich auf dieselbe Gefahrensituation beziehen.

9. Verfahren nach einem der vorangegangenen Ansprüche, bei dem geprüft wird, ob eine Gefahrensituation, die nur anhand von Informationen einer außerhalb des Fahrzeugs (100) angeordneten Informationsquelle ermittelt wird, mittels wenigstens eines Sensors (111) des Fahrzeugs (100) erfassbar ist, und bei dem die maximale Stufe kleiner als die höchste Stufe gewählt wird, wenn festgestellt wird, dass eine Gefahrensituation mittels des Sensors (111 ) erfassbar ist.

10. Verfahren nach einem der vorangegangenen Ansprüche, bei dem die geringste Stufe eine Warnung des Fahrers des Fahrzeugs (100) umfasst.

11. Verfahren nach einem der vorangegangenen Ansprüche, bei dem eine höchste Stufe automatische Eingriffe in das Fahrverhalten des Fahrzeugs (100) umfasst.

12. Verfahren nach einem der vorangegangenen Ansprüche, bei dem eine mittlere Stufe eine Vorkonditionierung des Fahrzeugs (100) umfasst.

13. System zum Erhöhen der Sicherheit in einem Fahrzeug (100), umfassend eine Steuereinrichtung (114), die dazu ausgebildet ist, eine Gefahrensituation anhand von Informationen, insbesondere Messsignalen, zu ermitteln, die von wenigstens einer Informationsquelle (202; 207; 111) bereitgestellt wird, die innerhalb oder außerhalb des Fahrzeugs (100) angeordnet ist, und die ferner dazu ausgebildet ist, in dem Fahrzeug (100) die Ausführung einer Sicherheitsmaßnahme zu steuern, wobei die Sicherheitsmaßnahme in Abhängigkeit von der Informationsquelle (202; 207) bestimmt wird,
**dadurch gekennzeichnet, dass**
dem abgestufte Sicherheitsmaßnahmen vorgesehen sind, wobei die auswählbaren Stufen auf eine vorgegebene maximale Stufe begrenzt werden können, und die höchste vorgesehene Stufe als maximale Stufe festgelegt wird, wenn eine Gefahrensituation anhand von Informationen ermittelt wird, die von einer Informationsquelle (111 ) innerhalb des Fahrzeugs (100) bereitgestellt werden.

## Claims

1. A method for increasing safety in a vehicle (100), in which a hazardous situation is detected on the basis of information which is provided by at least one information source (202; 207; 111) arranged inside or outside the vehicle (100), and in which in the vehicle (100) a safety measure is conducted which is determined in dependence on the information source (202; 207; 111),
**characterized in that**
the method includes graded safety measures, wherein the selectable grades can be restricted to a specified maximum grade, and the highest grade provided is defined as the maximum grade when a hazardous situation is detected on the basis of information which is provided by an information source (111) inside the vehicle (100).

2. The method according to claim 1, in which an information source (111) located inside the vehicle (100) comprises at least one environment sensor (111), wherein a hazardous situation is detected when on the basis of the environment data recorded by the environment sensor (111), an imminent collision of the vehicle (100) with an object in the environment (112) is detected.

3. The method according to claim 1 or 2, in which information which is provided by an information source (202; 207) located outside the vehicle (100) is received in the vehicle (100) by means of a communication interface (118), in particular by means of a radio receiver (118).

4. The method according to any one of the preceding claims, in which an information source (202; 207) located outside the vehicle (100) is arranged in a further vehicle (201) and/or is a component of a stationary facility (207).

5. The method according to any one of the preceding claims, in which the safety measure is determined in dependence on the arrangement of the information source (202; 207; 111) in relation to the vehicle (100).

6. The method according to any one of the preceding claims, in which in cases where a hazardous situation is solely detected on the basis of information provided by at least one information source (202; 207) outside the vehicle (100), the maximum grade is determined in dependence on the result of a comparison of information received from different information sources (202; 207).

7. The method according to any one of the preceding claims, in which in cases where a hazardous situation is solely detected on the basis of information provided by at least one information source (202; 207) outside the vehicle (100), the maximum grade is determined in dependence on the number of information sources (202; 207) arranged outside the vehicle (100) which provide information describing the same hazardous situation.

8. The method according to any one of the preceding claims, in which in cases where a hazardous situation is solely detected on the basis of information provided by at least one information source (202; 207) outside the vehicle (100), the maximum grade is determined in dependence on a time duration within which at least one information source (202; 207) outside the vehicle (100) provides information relating to the same hazardous situation.

9. The method according to any one of the preceding claims, in which a test is conducted to ascertain whether a hazardous situation which is solely detected on the basis of information from an information source arranged outside the vehicle (100) can be detected by means of at least one sensor (111) of the vehicle (100), and in which the maximum grade is selected to be lower than the highest grade when it is found that a hazardous situation can be detected by means of the sensor (111).

10. The method according to any one of the preceding claims, in which the lowest grade comprises a warning to the driver of the vehicle (100).

11. The method according to any one of the preceding claims, in which a highest grade comprises automatic interventions in the driving behaviour of the vehicle (100).

12. The method according to any one of the preceding claims, in which a middle grade comprises a pre-conditioning of the vehicle (100).

13. A system for increasing safety in a vehicle (100) comprising a control facility (114) which is designed to detect a hazardous situation on the basis of information, in particular measurement signals, which is provided by at least one information source (202; 207; 111) arranged inside or outside the vehicle (100), and which is furthermore designed to control the execution of a safety measure in the vehicle (100), wherein the safety measure is determined in dependence on the information source (202; 207),
**characterized in that**
graded safety measures are provided, wherein the selectable grades can be restricted to a specified maximum grade, and the highest grade provided is defined as the maximum grade when a hazardous situation is detected on the basis of information which is provided by an information source (111) inside the vehicle (100).

## Revendications

1. Procédé pour augmenter la sécurité dans un véhicule (100), dans lequel une situation de danger est détectée à l'aide d'informations qui sont fournies par au moins une source d'informations (202 ; 207 ; 111) qui est disposée à l'intérieur ou à l'extérieur du véhicule (100), et dans lequel une mesure de sécurité peut être mise en oeuvre dans le véhicule (100), laquelle est définie en fonction de la source d'informations (202 ; 207 ; 111),
**caractérisé en ce que**,
des mesures de sécurité échelonnées peuvent être prévues dans le procédé, les échelons sélectionnables pouvant être limités à un échelon maximal prédéfini, et l'échelon le plus élevé prévu étant stipulé en tant qu'échelon maximal quand une situation de danger est déterminée à l'aide d'informations qui sont fournies par une source d'informations (111) à l'intérieur du véhicule (100).

2. Procédé selon la revendication 1, dans lequel une source d'informations (111) située à l'intérieur du véhicule (100) comprend au moins un capteur d'environnement (111), une situation de danger étant déterminée quand, à l'aide des données d'environnement détectées au moyen du capteur d'environnement (111), une menace de collision du véhicule (100) avec un objet environnant (112) est déterminée.

3. Procédé selon la revendication 1 ou 2, dans lequel des informations qui sont fournies par une source d'informations (202 ; 207) disposée à l'extérieur du véhicule (100) sont reçues dans le véhicule (100) au moyen d'une interface de communication (118), en particulier au moyen d'un récepteur radio (118).

4. Procédé selon une des revendications précédentes, dans lequel une source d'informations (202 ; 207) disposée à l'extérieur du véhicule (100) est disposée dans un autre véhicule (201) et/ou fait partie d'un dispositif stationnaire (207).

5. Procédé selon une des revendications précédentes, dans lequel la mesure de sécurité est déterminée en fonction de la disposition de la source d'informations (202 ; 207 ; 111) par rapport au véhicule (100).

6. Procédé selon une des revendications précédentes, dans lequel, au cas où une situation de danger n'est déterminée qu'à l'aide d'informations qui sont fournies par au moins une source d'informations (202 ; 207) à l'extérieur du véhicule (100), l'échelon maximal est défini en fonction du résultat d'une comparaison d'informations qui sont reçues par différentes sources d'informations (202 ; 207).

7. Procédé selon une des revendications précédentes, dans lequel, au cas où une situation de danger n'est déterminée qu'à l'aide d'informations qui sont fournies par au moins une source d'informations (202 ; 207) à l'extérieur du véhicule (100), l'échelon maximal est défini en fonction du nombre de sources d'informations (202 ; 207) disposées à l'extérieur du véhicule (100) qui fournissent des informations qui décrivent la même situation de danger.

8. Procédé selon une des revendications précédentes, dans lequel, au cas où une situation de danger n'est déterminée qu'à l'aide d'informations qui sont fournies par au moins une source d'informations (202 ; 207) à l'extérieur du véhicule (100), l'échelon maximal est défini en fonction d'une période de temps à l'intérieur de laquelle au moins une source d'informations (202 ; 207) à l'extérieur du véhicule (100) fournit des informations qui se rapportent à la même situation de danger.

9. Procédé selon une des revendications précédentes, dans lequel il est vérifié si une situation de danger qui n'est déterminée qu'à l'aide d'informations d'une source d'informations disposée à l'extérieur du véhicule (100) est détectable au moyen d'au moins un capteur (111) du véhicule (100), et dans lequel l'échelon maximal choisi est plus petit que l'échelon le plus haut quand il est constaté qu'une situation de danger est détectable au moyen du capteur (111).

10. Procédé selon une des revendications précédentes, dans lequel l'échelon le plus faible comprend un avertissement au conducteur du véhicule (100).

11. Procédé selon une des revendications précédentes, dans lequel un échelon le plus élevé comprend des interventions automatiques dans le comportement de conduite du véhicule (100).

12. Procédé selon une des revendications précédentes, dans lequel un échelon moyen comprend un conditionnement préalable du véhicule (100).

13. Système pour augmenter la sécurité dans un véhicule (100), comprenant un dispositif de commande (114) qui est réalisé pour déterminer une situation de danger à l'aide d'informations, en particulier de signaux de mesure, qui sont fournies par au moins une source d'informations (202 ; 207 ; 111) qui est disposée à l'intérieur ou à l'extérieur du véhicule (100), et qui est en outre réalisé pour commander dans le véhicule (100) l'exécution d'une mesure de sécurité, la mesure de sécurité étant définie en fonction de la source d'informations (202 ; 207),
**caractérisé en ce que**
des mesures de sécurité échelonnées sont prévues, les échelons sélectionnables pouvant être limités à un échelon maximal prédéfini, et l'échelon le plus élevé prévu étant stipulé en tant qu'échelon maximal quand une situation de danger est déterminée à l'aide d'informations qui sont fournies par une source d'informations (111) à l'intérieur du véhicule (100).
